# EUROPEAN PATENT SPECIFICATION

(11) **EP 0 870 152 B1**
(45) Date of publication and mention of the grant of the patent: **06.11.2002**
(21) Application number: 97900841.4
(22) Date of filing: 13.01.1997
(51) Int. Cl.: F16L 55/165

(54) **METHOD FOR LINING UNDERGROUND PIPELINES**
VORRICHTUNG ZUM AUSKLEIDEN VON UNTERIRDISCHEN ROHRLEITUNGEN
PROCEDE DE DOUBLAGE DE PIPELINES SOUTERRAINS

(30) Priority: 11.01.1996 SE 9600091; 20.09.1996 WO PCT/SE96/01169
(43) Date of publication of application: 14.10.1998
(73) Proprietor: Uponor Innovation AB, 513 81 Fristad (SE)
(72) Inventor: AGREN, Lennart, S-502 49 Boräs (SE); MOLLSJÖ, Bo, S-510 54 Brämhult (SE); LUND, Arne, S-502 38 Boräs (SE); LEO, Harri, S-513 00 Fristad (SE); DICKINSON, Alan, John, Nottingham NG17 8LL (GB); JÄRVENKYLÄ, Jyri, FIN-15870 Hollola (FI); JORMAKKA, Veli-Pekka, FIN-15880 Hollola (FI)
(74) Representative: Petri, Stellan
(86) International application number: SE9700032
(87) International publication number: WO97025567

(56) References cited:
- EP-A- 0 098 547
- WO-A-87/04226
- WO-A-97/06941
- CH-A- 676 029
- GB-A- 2 264 765
- NO-B- 177 725
- US-A- 3 781 966
- US-A- 5 019 417
- US-A- 5 242 517
- US-A- 5 368 075
- US-A- 5 487 411

## Description

The present invention relates to a method for renovation of underground pipelines preferably for sewage, comprising introduction of a lining pipe into an existing pipeline, said lining pipe having a length corresponding to the length to be renovated, and consisting of a fusable polymer in a folded condition, and unfolding of the lining pipe in order to line the pipeline.

Folded pipes have already been used for lining pipelines for example according to SE-911948-9, where above all a combination of PE and PVC has given the prerequisites of the use of the concept relating to folded pipes. The basic concept of this technique is that a length of coiled prefabricated folded pipe material without transverse welding is transported successively into e.g. a manhole and is located in an existing pipeline to be lined, said pipeline connecting to the manhole. Introduction of a pipe in a folded condition makes possible to line with a pipe having the same outside diameter as the inside diameter of the existing pipelines. Thereby the capacity of the pipeline substantially can be maintained, no additional arrangements for fixing the pipe in its longitudinal direction being required and the connection of so called service pipelines being facilitated. When lining larger pipelines (⌀ ≥ 300 mm) this technique has, however, not been possible to use, mainly due to difficulties in handling folded pipes of such dimensions. This as a consequence of larger handling forces being required as well as problems with cracking in the fold areas of the pipes of larger dimensions. Moreover, the coils of the folded pipes have also been difficult, if not impossible, to handle in a normal environment, not least to transport on a truck, as a consequence of the dimensions of the folded pipes. This means, generally speaking, that the diameter of such a coil in order not to require special transport, must not have a diameter larger than 2400 mm. In order to unfold lining pipes according to conventional methods it has also been necessary to preheat the lining pipe to a temperature of between 100° C and 120° C. Moreover, at the lower temperature it has been necessary to apply an inner over-atmospheric pressure of about 5 bar, which for large dimensions sets high demands on security arrangements around the lining operation.

According to the invention described herein there is presented a solution to the problem of lining existing underground pipelines having a diameter > 300 mm with a continuous lining pipe introduced into the pipeline, the lining pipe being built up by introducing lining layers into the pipeline to be lined, pressurising the layers and successively fusing them together by exposing each layer for fusion heat from a heat source which is carried along the inside surface of the innermost layer of the lining built up so far. The consequtively introduced lining layers may alternately be opaque and translucent to heating energy to make fusion of more than two layers possible in one fusion step.

The method described makes possible to line existing pipelines having a diameter up to at least 800 mm.

By the use of the method and the use of a smaller relative wall thickness equipment, such as coils of lining material etc., will be less bulky and easier to handle.

It will also be possible to build up the pipe wall material for any application in an environmentally or cost optimised way so that only the outer layer may provide structural tensile properties and durability, while intermediate layers may provide only tensile properties and the inner layer/layers may be adapted to the medium the pipeline is intended for. A proper example is the use of PEX (Crosslinked Polyethylene) crosslinking during fusion after its introduction into the pipeline. Another example is the use of a foam as one of the layers, which is brought to react by means of fusion heat.

A lining according to the invention eliminates the risk for subsoil water penetrating between the existing pipeline and the lining due to the existing pipeline being in a too bad condition. In the worst case this may lead to the lining floating on the surface of the water with the consequence that sooner or later it may rupture due to abrasion or fatigue.

The invention will be described in more detail below with reference to an embodiment shown in the accompanying drawings, in which:
Fig 1 schematically illustrates the principle for introducing a folded length of lining into an existing pipeline via a manhole,
Fig 2a in a diagrammatic cross sectional view of through a relining pipe in a folded condition,
Fig 2b in a view corresponding to that one in fig 2a, wherein the lining has been unfolded,
Fig 3a is a cross sectional view of the pipeline illustrating how three unfolded lining layers are melted together, and
Fig 3b in a view corresponding to fig 3a illustrating how three already integrated layers are melted together with forth and fifth layers.

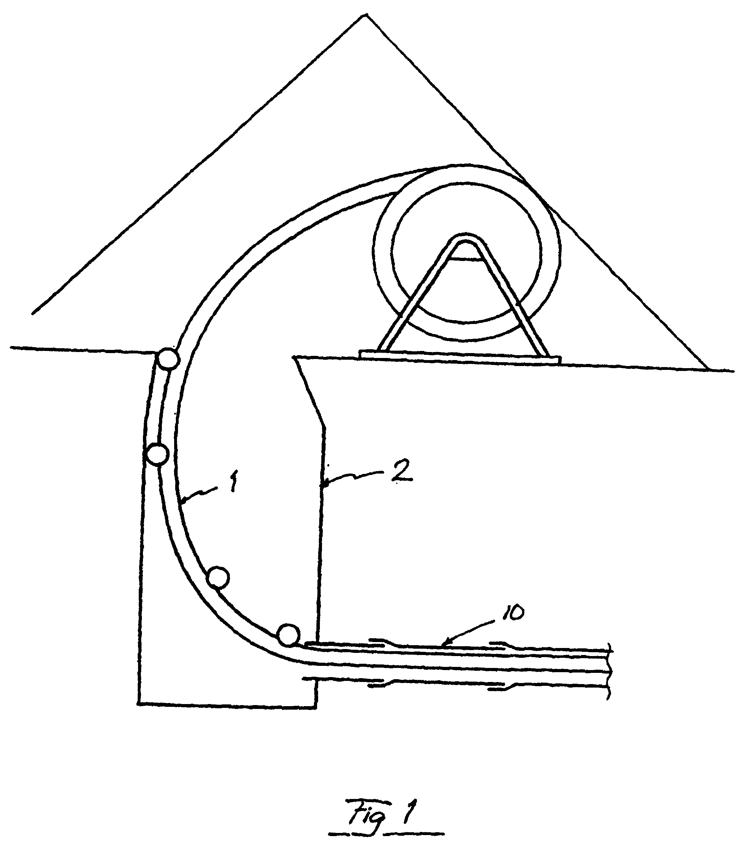

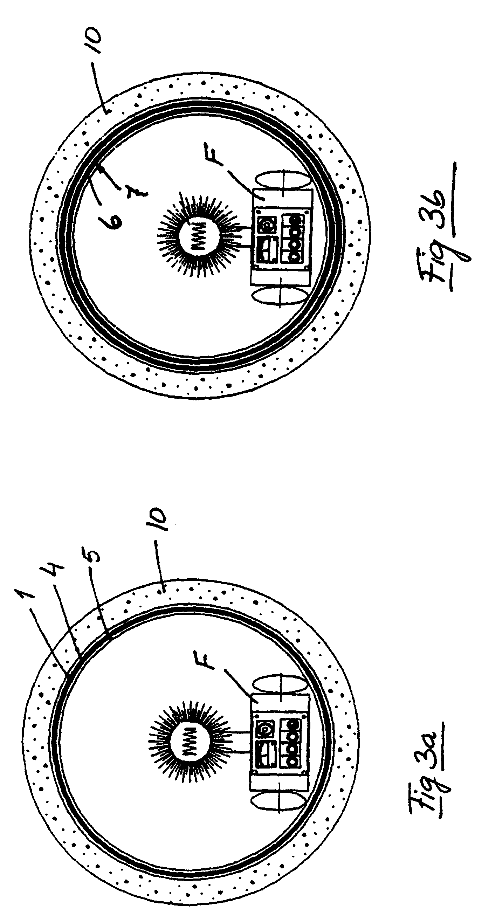

Fig 1 generally illustrates the method of passing a folded first lining layer 1 into a manhole 2 and into a pipeline 10 to be lined. With the aid of fig 1 it will be understood how the lining layer 1 in its entirety is introduced into the pipeline 10 to be lined up to the next corresponding manhole (not shown). However, fig 1 does not show that the layers are so thin (between 1 and 5 mm, preferably about 3 mm) that they do not require heating in order to be able to be passed down as required according to the state of the art. The material in itself is flexible enough. After the first layer 1 having been located, said layer preferably being translucent, the folded lining layer is sealed at both ends and then an inner over-pressure of up to 1.5 bar is applied. As a consequence therof the layer will be unfolded and will be pressed against the inside surface of the existing pipeline 10. Thereafter the seal of the lining layer is opened at one of its ends and another lining layer 4, this time preferably opaque, is introduced and unfolded by over-pressure as previously described. When introducing the second and next layers, a plug (not shown) that tightens against the preceding layer can be used, which also can be driven through the pipeline by pressure. Then a further preferably translucent lining layer 5 is introduced in the same manner, and after at least one end seal having been opened (this is possible because the material in this condition has sufficient shape stability), a self-propelled heating device 3 (see fig 3), emitting infrared light, is driven back and forth inside the lining, whereby the innermost translucent layer 5 in the pipeline by melting together with the adjacent opaque layer 4 as a consequence of heat emission also brings the outermost layer to such a temperature that also the layers 1 and 4 melt together. During the heating phase, the pressure is maintained in the pipeline in order to press the liner against the pipeline and to create the necessary welding/fusing pressure between the layers. At the same time (pressurised) air is circulated in the pipe to ventilate possible reaction gases. When the three first layers 1, 4, 5 have been located and melted together in the pipeline to be lined, lining layers 6, 7; 8, 9; ... etc. are introduced two and two, first preferably an opaque layer and then preferably a translucent layer, whereafter heating as mentioned above is carried out, said introduction and heating operations being repeated until a required wall thickness of the completed lining pipe has been obtained.

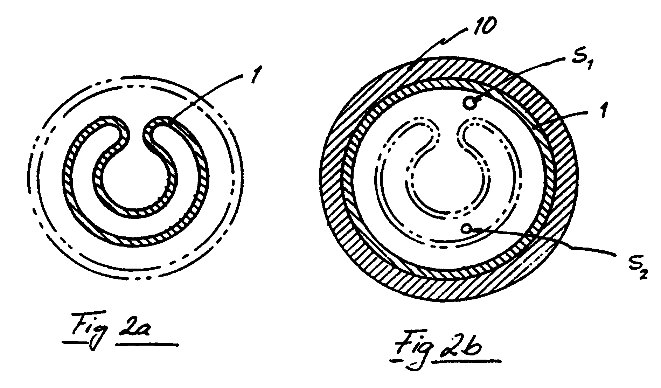

In fig 2a it can be seen how a lining pipe layer 1, 4, and 5, etc. of the kind referred to is folded in the folded condition thereof when it is introduced into the pipeline to be lined. Moreover, it can be seen fig 2b how the first relining layer fits snugly against the inside surface of the pipeline. The layers 4, 5, then inserted in the same way fit snugly against the adjacent outside layer and are consequently accurately dimensioned in lining steps. It is also possible to use one or more lining layers that is coextruded, some of which may be textile reinforced. In fig 2b there is also shown in cross section hoses S₁ and S₂ which according to one embodiment of the invention is arranged in the associated lining layer for the application of an inner overpressure as well as circulating gas, as mentioned above. The folding pattern shown in fig 2 according to a modified embodiment may be more closely similar to a traditional firehose, in other words it is more or less completely flat.

In fig 3 it is diagrammatically illustrated how the self-propelled heating device 3 for said welding operation is constructed in accordance with a preferred embodiment. The heating device 3 comprises a chassis with driven wheels having a device mounted thereon which when activated together with the associated power and drive unit F, emits heat radiation preferably in the short wave infrared area. Due to the ambition to avoid IR-radiation absorption peaks, the wavelength ranges from 0.7 to 1.5 µm, and is preferably in the region of 1.15 µm, wherein the infrared radiation is the most intense per unit of time. The filtered wavelength and different absorption properties of the lining layers together prevent both that the inner surface of the liner is too much heated and that the heating energy is directed to the deeper layer(s). The device mounted on the chassis extends in the longitudinal direction of the pipe in order to have an omnidirectional effect. The heating device may be driven from the one or the other end of the relining pipe. It is, however, an advantage if the heating device can roll on a surface having normal surrounding temperature.

## Claims

1. Method for renovation of pipelines comprising introduction of a lining pipe into an existing pipeline, said lining pipe having a length corresponding to the length to be renovated, and consisting of lining layers of a fusable polymer in a folded condition, and unfolding of the lining pipe in order to line the pipeline, **characterized in that** the lining pipe is built up by introducing lining layers (1, 4, 5, 6, 7, 8, 9) in the pipeline to be lined, pressuring said layers and successively fusing them together by exposing each layer (1, 4-9) for fusion heat from a heat source (3), which is carried along the inside surface of the innermost layer of the lining built up so far.

2. Method according to claim 1, **characterized in that** one or more of the lining layers comprise PEX, crosslinking after their introduction into the pipeline.

3. Method according to claim 2, **characterized in that** the crosslinking is achieved during fusing of the layers.

4. Method according to anyone of the preceding claims, **characterized in that** two or more lining layers are introduced at the same time and/or consecutively in the pipeline to be lined.

5. Method according to anyone of the preceding claims, **characterized in that** after the introduction of the first lining layers and after said layers having been pressurised the pressure is at least to some extent lowered before the layers are fused together by means of a heating device, which is introduced at one of the ends of the lining layers.

6. Method according to anyone of the preceding claims, **characterized in that** the different layers are given different properties depending on the radial position thereof.

7. Method according to anyone of the preceding claims, **characterized in that** at least one of the layers is a foam layer, which is brought to react by means of fusion heat.

8. Method according to anyone of the preceding claims, **characterized in that** the heat source used during the fusing operation is infrared light.

9. Method according to claim 8, **characterized in that** use is made of IR wave-lengths differing from absorption peaks of the plastic material used.

10. Methods according to claim 9, **characterized in that** infrared light having a wave-length of 0.7 to 1.5 µm is used.

11. Method according to claim 9 or 10, **characterized in that** coextruded layers are used.

12. Method according to claim 11, **characterized in that** one or more of said layers are textile reinforced.

13. Method according to anyone of claims 9-12, **characterized in that** the lining pipe at least partly comprise several independently loose layers which are heated and fused together in a one step process after insertion.

14. Method according to anyone of the preceding claims, **characterized in that** the lining layers are opaque and translucent alternately and that the heat source (3) is employed along at least every third lining layer so far introduced.

15. Method according to anyone of the preceding claims, **characterized in that** the lining layers are introduced into the pipeline through a manhole and then fused together and **in that** the ratio between the outside diameter and the wall thickness of the completed liner composed of the lining layers fused together is less than 100, preferably less than 51.

16. Pipeline comprising a previously installed outer pipeline and a later installed inner thermoplastic pipe produced by the method according to anyone of claims 1-15, **characterized in that** the thermoplastic pipe is formed of more than two layers introduced into the outer pipeline and that the layers are fused to each other, the outermost layer being in contact with the outer pipeline, also in such locations where it has local dimensional reductions, and covers the possible flange/socket joints of the outer pipeline.

## Patentansprüche

1. Verfahren zu Instandsetzung von Rohrleitungen, welches das Einführen einer Ausfütterungsröhre in eine befindliche Rohrleitung umfasst, wobei die Ausfütterungsröhre eine Länge hat, welche der zu instandsetzenden Länge entspricht, und aus Ausfütterungsschichten aus einem verschmelzbaren Polymer in einem zusammengefalteten Zustand besteht, sowie Entfalten der Ausfütterungsröhre, um die Rohrleitung auszufüttern, **dadurch gekennzeichnet, dass** die Ausfütterungsröhre sich durch Einführen der Ausfütterungsschichten (1, 4, 5, 6, 7, 8 ,9) in die auszufütternde Rohrleitung, sowie Druckbeaufschlagung der Schichten und sukzessives Zusammenschweissen der Schichten durch aussetzen jeder Schicht (1, 4-9) für Schmelzwärme von einer Wärmequelle (3), welche längs der inneren Oberfläche der innersten Schicht der soweit aufgebauten Ausfütterung bewegt wird, aufbaut.

2. Verfahren gemäss Anspruch 1, **dadurch gekennzeichnet, dass** eine oder mehrere der Ausfütterungsschichten PEX umfasst, welches nach deren Einführung in die Rohrleitung vernetzt wird.

3. Verfahren gemäss Anspruch 2, **dadurch gekennzeichnet, dass** das Vernetzen während dem Verschmelzen der Schichten vollbracht wird.

4. Verfahren gemäss einem der vorhergehenden Ansprüche, **dadurch gekennzeichnet, dass** zwei oder mehr Ausfütterungsschichten gleichzeitig und/oder aufeinanderfolgend in die auszufütternde Rohrleitung eingeführt werden.

5. Verfahren gemäss einem der vorhergehenden Ansprüche, **dadurch gekennzeichnet, dass** nach dem Einführen der ersten Ausfütterungsschichten und nachdem die Schichten mit Druck beaufschlagt worden sind, der Druch zumindest in einem gewissen Ausmass gesenkt wird, bevor die Schichten mit Hilfe einer Wärmevorrichtung, welche an einem der Enden der Ausfütterungsschichten eingeführt wird, miteinander verschweisst werden.

6. Verfahren gemäss einem der vorhergehenden Ansprüche, **dadurch gekennzeichnet, dass** die verschiedenen Schichten mit verschiedenen Eigenschaften versehen sind, welche von der jeweiligen radialen Position abhängen.

7. Verfahren gemäss einem der vorhergehenden Ansprüche, **dadurch gekennzeichnet, dass** wenigstens eine der Schichten eine Schaumschicht ist, welche mit Hilfe von Verschmelzungswärme zum Reagieren gebracht wird.

8. Verfahren gemäss einem der vorhergehenden Ansprüche, **dadurch gekennzeichnet, dass** die während des Verschmelzungsvorganges verwendete Wärmequelle infrarotes Licht ist.

9. Verfahren gemäss Anspruch 8, **dadurch gekennzeichnet, dass** von infraroten Wellenlängen Gebrauch gemacht wird, welche von den Absorptionsspitzen des verwendeten Plastikmaterials abweicht.

10. Verfahren gemäss Anspruch 9, **dadurch gekennzeichnet, dass** infrarotes Licht mit einer Wellenlänge von 0,7 bis 1,5 µm verwendet wird.

11. Verfahren gemäss Anspruch 9 oder 10, **dadurch gekennzeichnet, dass** gemeinsam stranggepresste Schichten verwendet werden.

12. Verfahren gemäss Anspruch 11, **dadurch gekennzeichnet, dass** eine oder mehrere der Schichten textilverstärkt sind.

13. Verfahren gemäss einem der Ansprüche 9-12, **dadurch gekennzeichnet, dass** die Ausfütterungsröhre wenigstens teilweise mehrere unabhängige und zusammenhängende Schichten umfasst, welche in einem Prozesschritt nach dem Einführen zusammen erhitzt und verschweisst werden.

14. Verfahren gemäss einem der vorhergehenden Ansprüche, **dadurch gekennzeichnet, dass** die Ausfütterungsschichten abwechselnd lichtundurchlässig lichtdurchlässig sind und dass die Wärmequelle (3) mindestens längs jeder dritten bisher eingeführten Ausfütterungsschicht angewendet wird.

15. Verfahren gemäss einem der vorhergehenden Ansprüche, **dadurch gekennzeichnet, dass** die Ausfütterungsschichten in die Rohrleitung durch einen Einstiegsschacht eingeführt werden und dann miteinander verschweisst werden, und dass das Verhältnis zwischen dem Aussendurchmesser und der Wandstärke des vollständigen Futterrohres, welches aus den zusammengeschweissten Ausfütterungsschichten zusammengesetzt ist, weniger als 100 ist, vorzugsweise weniger als 51.

16. Rohrleitung welche eine vorhergehend installierte äussere Rohrleitung und eine später installierte innere thermoplastische Röhre, welche nach dem Verfahren gemäss einem der Ansprüche 1-15 hergestellt ist, umfasst, **dadurch gekennzeichnet, dass** die thermoplastische Röhre aus mehr als zwei Schichten gebildet wird, welche in die äussere Rohrleitung eingeführt werden und dass die Schichten miteinander verschweisst sind, wobei die äusserste Schicht in Kontakt mit der äusseren Rohrleitung steht, also an solchen Orten, wo sie lokale Massreduzierungen hat, und die eventuellen Flansch-/Rohrstutzen - fugen der äusseren Rohrleitung abdeckt.

## Revendications

1. Procédé de rénovation de pipelines comprenant l'introduction d'un tuyau de revêtement dans un pipeline existant, ledit tuyau de revêtement ayant une longueur correspondant à la longueur à rénover et étant formé de couches de revêtement en polymère fusible, à l'état replié, et le dépliage du tube de revêtement afin de revêtir le pipeline, **caractérisé en ce que** le tube de revêtement est formé par introduction de couches de revêtement (1, 4, 5, 6, 7, 8, 9) dans le pipeline à revêtir, mise sous pression desdites couches et fusion successive de celles-ci entre elles par exposition de chaque couche (1, 4 à 9) à de la chaleur de fusion provenant d'une source de chaleur (3), transportée le long de la surface intérieure de la couche la plus intérieure du revêtement ainsi constitué.

2. Procédé selon la revendication 1, **caractérisé en ce qu'**une ou plusieurs des couches de revêtement comprend du PEX, réticulant après son introduction dans le pipeline.

3. Procédé selon la revendication 2, **caractérisé en ce que** la réticulation est effectuée pendant la fusion des couches.

4. Procédé selon l'une quelconque des revendications précédentes, **caractérisé en ce que** deux couches de revêtement ou plus sont introduites en même temps et/ou successivement, dans le pipeline à revêtir.

5. Procédé selon l'une quelconque des revendications précédentes, **caractérisé en ce que**, après l'introduction des premières couches de revêtement et après que lesdites couches aient été mises sous pression, la pression est au moins dans une certaine mesure abaissée avant que les couches soient fusionnées ensemble, à l'aide d'un dispositif de chauffage, qui est introduit à l'une des extrémités des couches de revêtement.

6. Procédé selon l'une quelconque des revendications précédentes, **caractérisé en ce que** les différentes couches ont des propriétés différentes selon leur position radiale.

7. Procédé selon l'une quelconque des revendications précédentes, **caractérisé en ce qu'**au moins l'une des couches est une couche de matériau alvéolaire ou mousse, mise en réaction en utilisant la chaleur de fusion.

8. Procédé selon l'une quelconque des revendications précédentes, **caractérisé en ce que** la source de chaleur utilisée durant l'opération de fusion est de la lumière infrarouge.

9. Procédé selon la revendication 8, **caractérisé en ce qu'**on utilise des longueurs d'ondes IR différentes des pics d'absorption de la matière plastique utilisée.

10. Procédé selon la revendication 9, **caractérisé en ce qu'**on utilise une lumière à infrarouge d'une longueur d'onde de 0,7 à 1,5 µm.

11. Procédé selon la revendication 9 ou 10, **caractérisé en ce qu'**on utilise des couches co-extrudées.

12. Procédé selon la revendication 11, **caractérisé en ce qu'**une ou plusieurs desdites couches sont renforcées par du textile.

13. Procédé selon l'une quelconque des revendications 9 à 12, **caractérisé en ce que** le tuyau de revêtement comprend au moins partiellement plusieurs couches lâches indépendantes, qui sont chauffées et fusionnées ensemble en un processus conduit en une seule étape, après insertion.

14. Procédé selon l'une quelconque des revendications précédentes, **caractérisé en ce que** les couches de revêtement sont opaques et translucides, de façon alternée, et **en ce que** la source de chaleur (3) est utilisée sur au moins chaque troisième couche de revêtement ainsi introduite.

15. Procédé selon l'une quelconque des revendications précédentes, **caractérisé en ce que** les couches de revêtement sont introduites dans le pipeline en passant par un trou d'homme, puis fusionnées ensemble, et **en ce que** le rapport entre le diamètre extérieur et l'épaisseur de paroi du revêtement achevé, formé des couches de revêtement fusionnées ensemble, est inférieur à 100, de préférence inférieur à 51.

16. Pipeline comprenant un pipeline extérieur antérieurement installé et un tube thermoplastique intérieur installé ultérieurement, produit par le procédé selon l'une quelconque des revendications 1 à 15, **caractérisé en ce que** le tube thermoplastique est formé d'une pluralité de couches en un nombre supérieur à deux introduites dans le pipeline extérieur et **en ce que** les couches sont fusionnées les unes aux autres, la couche la plus à l'extérieur étant en contact avec le pipeline extérieur, également aux endroits où il présente des réductions dimensionnelles locales, et couvre les éventuels joints à bride/emboîtement du pipeline extérieur.
